# EUROPEAN PATENT SPECIFICATION

(11) **EP 2 990 271 B1**
(45) Date of publication and mention of the grant of the patent: **26.09.2018**
(21) Application number: 14789050.3
(22) Date of filing: 22.04.2014
(51) Int. Cl.: H01M 2/10, H01M 10/6561, H01M 10/658, B60R 16/04

(54) **BATTERY COVER**
BATTERIEABDECKUNG
PROTECTION DE BATTERIE

(30) Priority: 24.04.2013 JP 2013091404
(43) Date of publication of application: 02.03.2016
(73) Proprietor: Nitto Denko Corporation, Ibaraki-shi, Osaka 567-8680 (JP)
(72) Inventor: MUTO, Shinji, Ibaraki-shi Osaka 567-8680 (JP); IWATA, Jun, Ibaraki-shi Osaka 567-8680 (JP); NISHINO, Masashi, Ibaraki-shi Osaka 567-8680 (JP)
(74) Representative: Schwabe - Sandmair - Marx
(86) International application number: PCT/JP2014/061272
(87) International publication number: WO 2014/175259

(56) References cited:
- EP-A1- 1 551 067
- WO-A1-2013/030881
- CN-U- 201 673 950
- JP-A- H04 331 644
- JP-A- 2003 072 387
- JP-A- 2006 134 854
- JP-U- 3 122 083
- US-A- 5 212 025
- US-A1- 2011 293 980

## Description

### TECHNICAL FIELD

The present invention relates to a battery cover. In particular, the present invention relates to a battery cover used to protect a vehicle battery from heat.

### BACKGROUND ART

Vehicle batteries are generally placed in an engine room along with the engine. In vehicle batteries, heat from, for example, the engine heats the battery surface to increase the temperature of the battery fluid inside the battery. As a result, the battery's life is shortened.

Thus, to protect the battery from heat, Patent Document 1 has proposed a battery cover to cover the side faces of the battery.

Patent Document 1 has disclosed a battery cover having a side wall portion of a double-wall structure composed of an outer wall and an inner wall, and a hollow closed space formed between the outer wall and the inner wall.

### Citation List

### Patent Document

### Patent Document 1

Japanese Unexamined Patent Publication No.H8-2349
CN 201 673 950 U discloses a battery cover, in particular a vehicle battery cover which is arranged at the periphery of a battery on a vehicle in a covering way and is provided with a foldable frame-shaped cover main body formed by bending a resin board, and the frame shape of the cover main body is formed by depositing two ends of the resin board. With the adoption of the battery cover, the heat conduction to the battery can be prevented by the cover main body, therefore, good heat-insulating performance can be ensured. Furthermore, the cover main body is formed by bending the resin board, therefore, the battery cover can be manufactured at low cost. In addition, the cover main body can be folded, therefore, the conveying efficiency can be improved. The deposition of the two ends of the resin board leads the cover main body to form a frame shape, therefore, the battery body cannot be scratched EP 1 551 067 A1 discloses a battery that operates at ambient temperature whose temperature rise can be limited , the temperature rise being due to heat generated at an outside heat source mounted close to the battery. A hollow space is formed in a wall of a battery container or a heat insulating material is mixed in a resin of the battery container, thereby enhancing the heat insulating effect of the battery container. Of the outer surface of the battery container, a portion adapted to be in contact with a battery-supporting member is provided with projecting extensions or protuberances and depressions so that heat generated outside of the battery is prevented from being transferred by conduction. A shield member is disposed on the outer surface of the battery container so that heat transfer to the battery by radiation is prevented.

### SUMMARY OF THE INVENTION

### PROBLEM TO BE SOLVED BY THE INVENTION

However, when the battery cover described in Patent Document 1 is used, the entire inner wall is brought into close contact with the side faces of the battery. Meanwhile, the lower
portion of the inside of the battery is filled with a battery fluid.

Therefore, when heat from outside heats the exposed surface of the battery upper portion, the heat spreads to the entire side faces of the battery through the inner wall of the battery cover to be conducted to the battery fluid, and therefore it is disadvantageous in that the battery is not protected sufficiently from the heat from outside. Therefore, further improved heat-insulating properties that suppress heat conduction from outside to the battery side faces and battery fluid are demanded.

An object of the present invention is to provide a battery cover having improved heat-insulating properties.

### MEANS FOR SOLVING THE PROBLEM

A battery cover of the present invention includes side walls that cover four side faces of the battery, and a first spacer provided at a top portion of the side walls for providing a space between the battery and the side walls.

This configuration allows for generation of a space (air layer) between the side faces of the battery and the battery cover. Therefore, the heat conducted from outside to the side walls of the battery cover is not conducted directly to the battery side faces through the battery cover. Therefore, the battery cover has excellent heat-insulating properties, and effectively protects the battery from outside heat.

In the battery cover of the present invention a second spacer is provided on the side walls along up-down directions.

In such a configuration, the second spacer is in contact with the side faces of the battery along the up-down directions, and therefore the space between the side walls of the battery cover and the side faces of the battery can be kept.

In the battery cover of the present invention the second spacer is provided on the side walls so as to be brought into contact with the corners of the side faces of the battery when the battery cover is attached to the battery.

This configuration allows for the battery cover to be attached more reliably to the battery because the corners of the side faces of the battery have high strength.

In the battery cover of the present invention the second spacer includes at least four second spacers, and the at least four second spacers are provided on the side wall so as to be brought into contact with the four corners of the side faces of the battery.

This configuration allows for the battery cover to be attached more reliably to the battery, and the space between the side walls of the battery cover and the side faces of the battery can be kept, because the second spacers are brought into contact with the four corners of the battery.

In the battery cover of the present invention, it is preferable that at least four folding portions are provided at the side walls in spaced-apart relation to each other.

This configuration allows for folding of the battery cover, and therefore the battery cover can be carried and stored in a compact size.

In the battery cover of the present invention, it is preferable that each of the folding portions includes two bending portions.

This configuration allows for forming of two angles at the corner of the battery cover when attaching the battery cover to the battery. Thus, a space can be reliably formed between the side walls of the battery cover and side faces of the battery by bringing the corners of the battery cover into contact with the corners of the side faces of the battery.

Furthermore, this configuration allows for easing of the stress caused when the first spacers facing each other at the folding portions make contact upon folding the battery cover. As a result, damages to the first spacer can be reduced when the battery cover is folded and stored.

It is preferable that the battery cover of the present invention further includes an outside air intake mechanism that allows the outside air to be introduced into the space.

This configuration allows for fresh air to be introduced into the space between the side faces of the battery and the battery cover. As a result, the battery can be cooled quickly.

In the battery cover of the present invention, it is preferable that the outside air intake mechanism includes an opening that allows for communication between the outside and inside of the space, and a flap that opens and closes the opening.

This configuration allows for the flap to suitably open to introduce air from the opening into the space. As a result, the battery can be reliably cooled.

In the battery cover of the present invention, it is preferable that the outside air intake mechanism includes at least two openings that allow for communication between the outside and inside of the space.

This configuration allows for any one of the openings to introduce fresh air into the space, and the other opening to discharge internal air of the space to outside. As a result, the battery can be reliably cooled.

In the battery cover of the present invention, it is preferable that the at least two openings are provided on the side wall and/or the first spacer, and at least one of the openings is an inlet and at least one of the openings is an outlet.

This configuration allows for the inlet to introduce fresh air and the outlet to discharge, and therefore a pathway for fresh air can be formed in the space. As a result, the battery can be cooled more efficiently.

It is preferable that the battery cover of the present invention includes a stretch portion so as to be brought into contact with the corners of the side faces of the battery when the battery cover is attached to the battery.

This configuration allows for the stretch portion to stretch in accordance with the corners of the side faces of the battery when the battery cover is attached to the battery, and therefore the battery cover can be attached to the battery easily.

In the battery cover of the present invention, it is preferable that the side walls are formed from a heat insulating material.

This configuration allows for further improvement in heat-insulating properties of the battery cover. Therefore, the battery can be protected from heat.

In the battery cover of the present invention, it is preferable that the side walls include a foam layer, and skins laminated on both sides of the foam layer.

This configuration allows for further improvement in heat-insulating properties of the battery cover. Therefore, further protection of the battery from heat can be achieved.

### EFFECTS OF THE INVENTION

The battery cover of the present invention has excellent heat-insulating properties. Therefore, the battery can be effectively protected from outside heat.

### BRIEF DESCRIPTION OF THE DRAWINGS

FIG. 1 shows a perspective view of the battery cover of the present invention in a first embodiment.
FIG. 2 shows a developed view of the battery cover shown in FIG. 1.
FIG. 3 (a) and (b) are cross-sectional views of the battery cover shown in FIG. 2, FIG. 3 (a) showing a cross-sectional view taken along A-A, and FIG. 3 (b) showing a cross-sectional view taken along B-B.
FIG. 4 shows a perspective view of the battery cover of FIG. 1 attached to the battery.
FIG. 5 shows a side sectional view taken along C-C in FIG. 4.
FIG. 6 shows a transverse cross-sectional view taken along D-D in FIG. 4.
FIG. 7 (a) and (b) shows an embodiment in which the battery cover of FIG. 1 is folded, FIG. 7 (a) showing a side view and FIG. 7 (b) showing a plan view.
FIG. 8 (a) and (b) show another embodiment in which the battery cover of FIG. 1 is folded, FIG. 8 (a) showing a side view, and FIG. 8 (b) showing a plan view.
FIG. 9 shows a perspective view of the battery cover of the present invention in a second embodiment.
FIG. 10 (a) and (b) show side sectional views of the battery cover shown in FIG. 9, FIG. 10 (a) showing the flap when it is closed, and FIG. 10 (b) showing the flap when it is opened.
FIG. 11 shows a side sectional view of the battery cover of the present invention in a third embodiment when it is attached to the battery.
FIG. 12 shows a side sectional view of the battery cover of the present invention in a fourth embodiment when it is attached to the battery.
FIG. 13 shows a side sectional view of the battery cover of the present invention in a fifth embodiment when it is attached to the battery.
FIG. 14 (a) and (b) show partially enlarged views of the battery cover of the present invention,

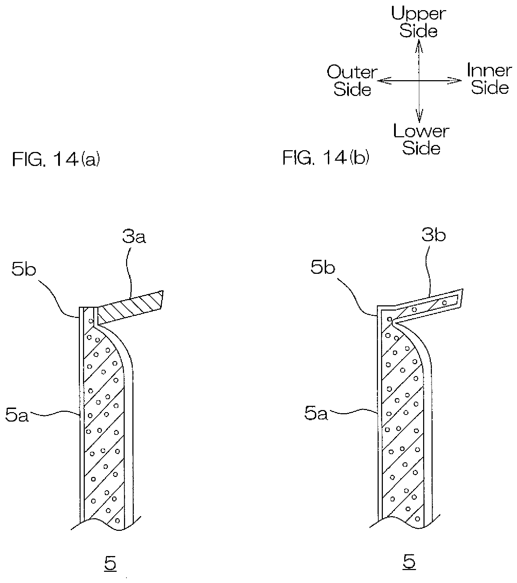

FIG. 14 (a) showing a sixth embodiment, and FIG. 14 (b) showing a seventh embodiment.

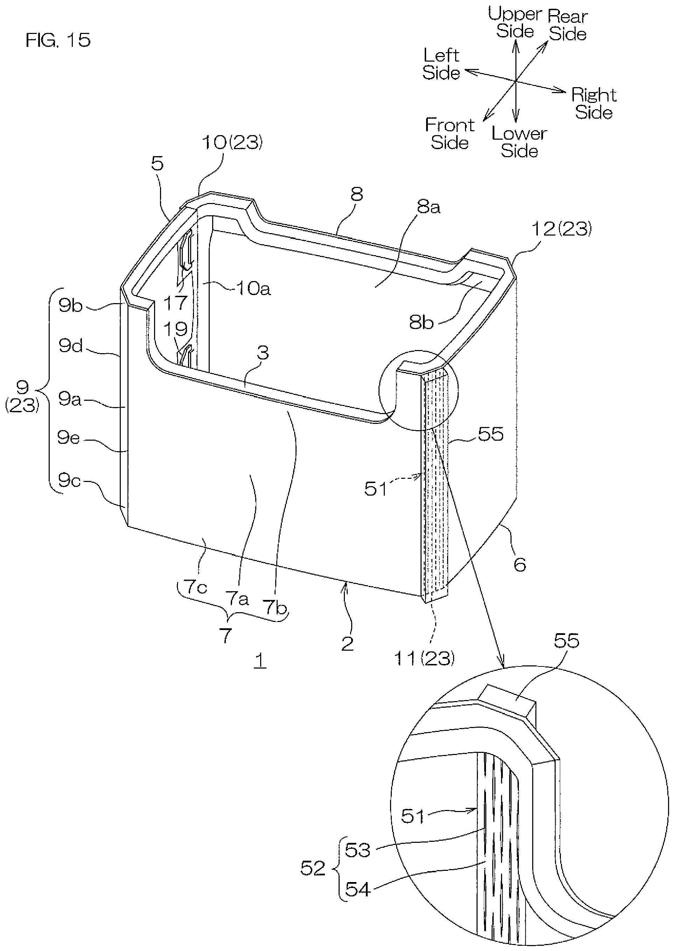

FIG. 15 shows a perspective view and a partially enlarged view of the battery cover of the present invention in a ninth embodiment.
FIG. 15 shows a perspective view and a partially enlarged view of the battery cover of the present invention in a ninth embodiment.

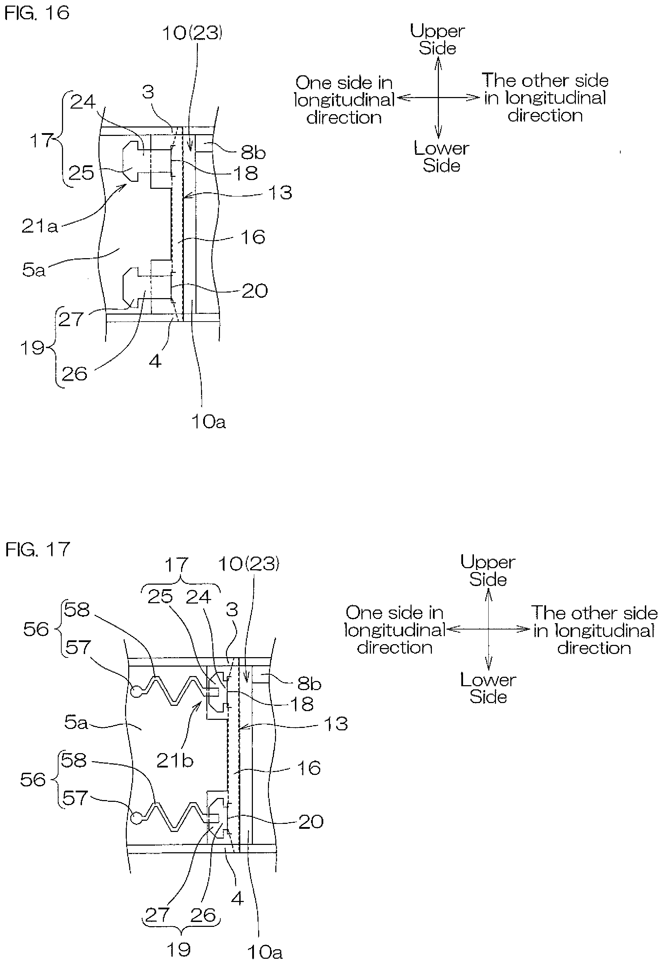

FIG. 16 shows a side sectional view of the battery cover of the present invention in a tenth embodiment.
FIG. 17 shows a side sectional view of the battery cover of the present invention in an eleventh embodiment.

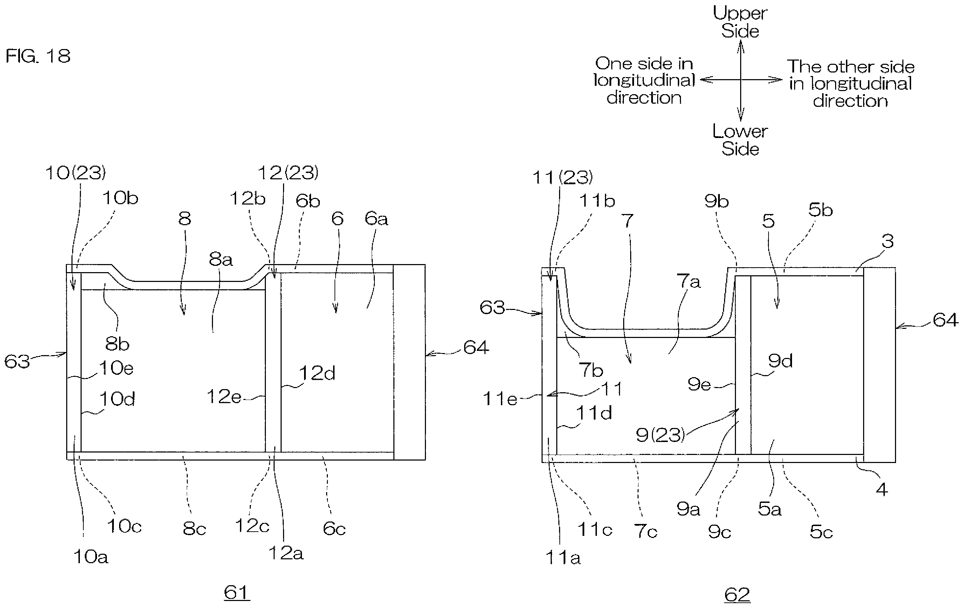

FIG. 18 shows a side sectional view of the battery cover of the present invention in a twelfth embodiment.

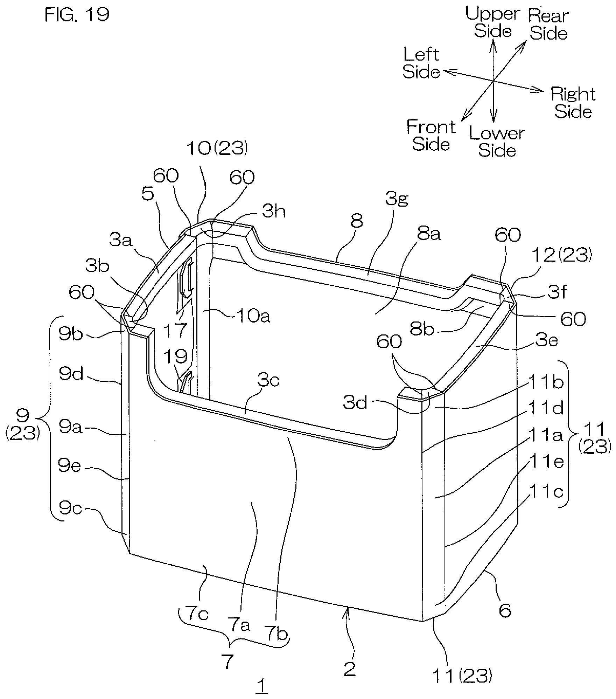

FIG. 19 shows a perspective view of the battery cover of the present invention in a thirteenth embodiment.

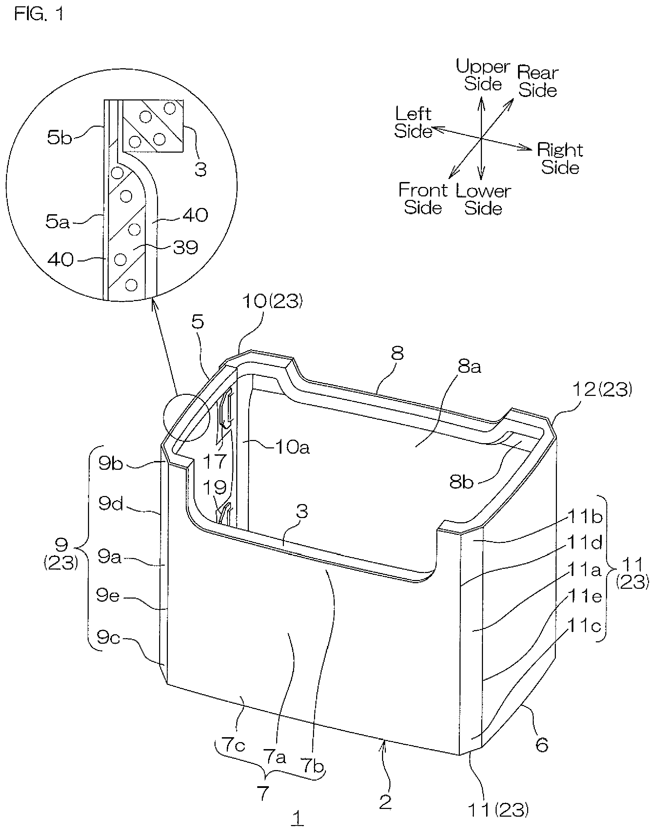

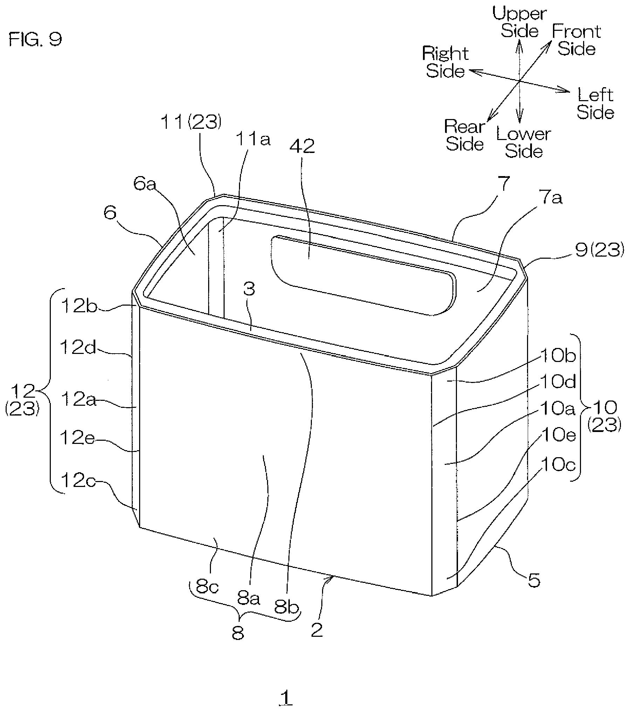

FIGS. 1-8 relate to the embodiment of the present invention, while FIGS. 9-19 relate to other embodiments that are introduced for explanatory purposes only.

### [DESCRIPTION OF EMBODIMENTS]

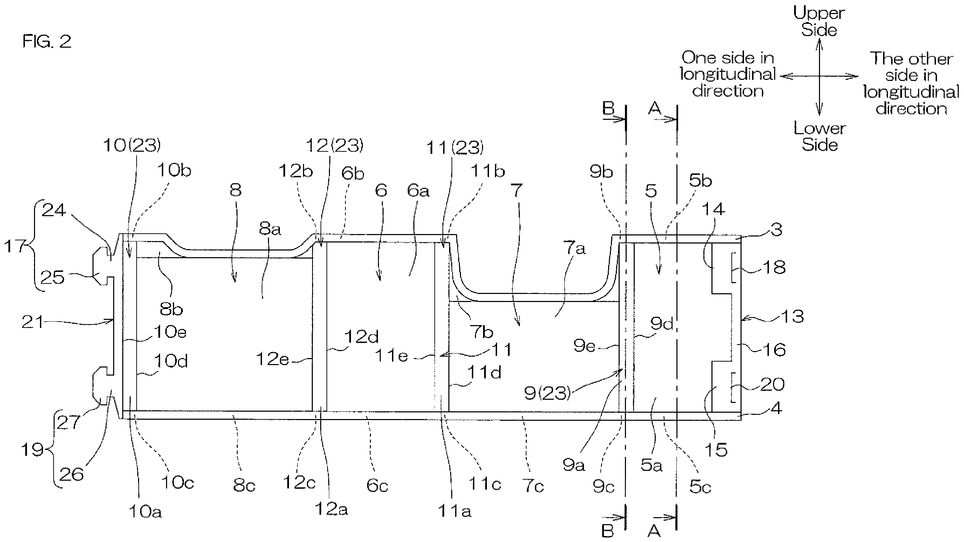

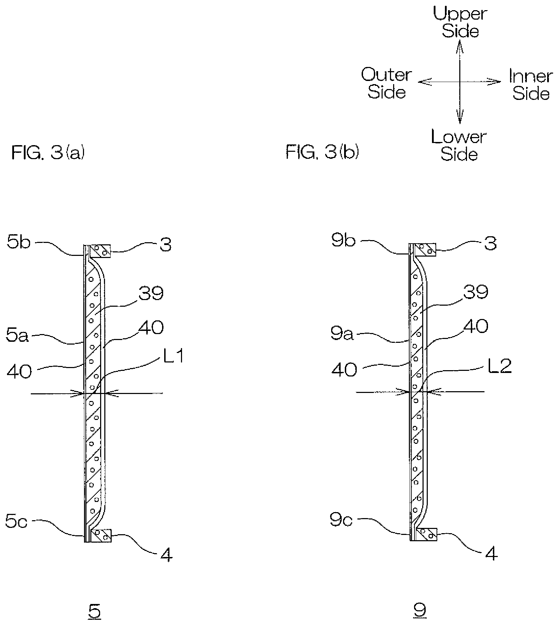

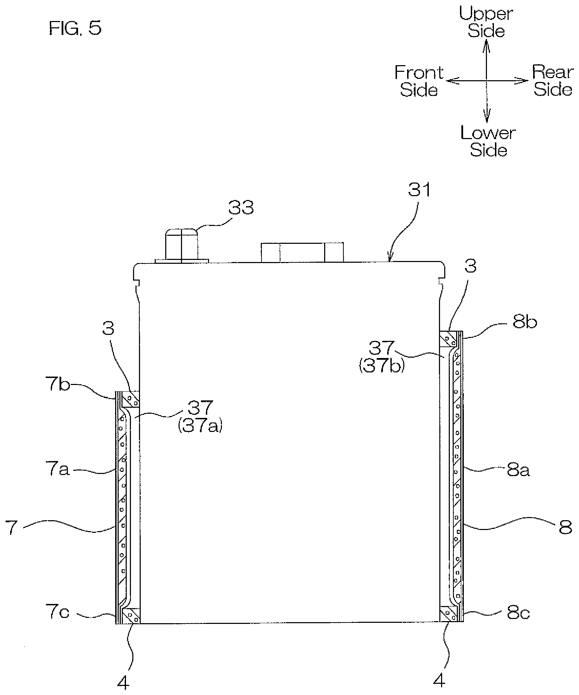

The directions described below are in conformity with the direction arrows shown in FIG. 1, FIG. 4, FIG. 9, FIG. 15, and FIG. 19. The directions in FIG. 5, FIG. 6, and FIG. 10 (a), (b) to 13 are also in conformity with the directions shown in FIG. 1. The directions in FIG. 2 are as follows: upper side on the plane of the sheet is upper side, lower side on the plane of the sheet is lower side, left side on the plane of the sheet is one side in longitudinal direction of the battery cover, right side on the plane of the sheet is the other side in longitudinal direction of the battery cover, front side on the plane of the sheet is inner side of the battery cover, and front side on the plane of the sheet is outside of the battery cover. The directions in FIG. 3 (a) to FIG. 3 (b), FIG. 7 (a) to FIG. 7 (b), FIG. 8 (a) to FIG. 8 (b), FIG. 14 (a) to FIG. 14 (b), and FIG. 16 to 18 are also in conformity with the directions shown in FIG. 2.

### <First embodiment>

### 1. Battery cover

In the first embodiment, the battery cover 1 has a prismatic shape extending in up-down directions as shown in FIG. 1 and is formed into generally a rectangular frame shape when viewed from the top. The battery cover 1 includes a plurality of (four) side walls 2, a plurality of (four) connecting portions 23 that connect the side walls 2, a first spacer 3 provided at an upper end of the inner side face of the side walls 2 and the connecting portions 23, and a third
spacer 4 provided at a lower end of the inner side face of the side walls 2 and the connecting portions 23 (ref: FIG. 2 and FIG. 3 (a) to FIG. 3 (b)).

The four side walls 2 include a left wall 5 and a right wall 6 that are disposed to face each other in spaced-apart relation in left-right directions, and a front wall 7 and a rear wall 8 that are disposed to face each other in spaced-apart relation in front-back directions.

The four connecting portions 23 include a left-front connecting portion 9 that connects the left wall 5 and the front wall 7, a left-rear connecting portion 10 that connects the left wall 5 and the rear wall 8, a right-front connecting portion 11 that connects the right wall 6 and the front wall 7, and a right-rear connecting portion 12 that connects the right wall 6 and the rear wall 8.

As shown in the developed view of FIG. 2, the side wall 2 and the connecting portion 23 are formed into generally a rectangular shape elongated in a circumferential direction (longitudinal direction). A thin portion (described later) is formed at the upper end portion and the lower end portion of the side wall 2 and the connecting portion 23, and a thick portion (described later) having heat-insulating properties is formed at the center portion thereof. The first spacer 3 is provided at the thin portion at the upper end portion, and the third spacer 4 is provided at the thin portion of the lower end portion.

Each of the connecting portions 23 includes a second spacer (described later) provided along the up-down directions, and the two bending portions (described later) provided on both sides of the second spacer.

At the connecting portion 23, one side wall 2 of the side walls 2 that are next to each other is connected to the second spacer (described later) through one bending portions (described later), and the other side wall 2 is connected to the second spacer through the other bending portions.

To be specific, as shown in FIG. 2, the left wall 5 is formed into generally a rectangular shape when viewed from the side having a longer length in up-down directions than the length in longitudinal direction.

The left wall 5 integrally includes a left thick portion 5a, a left-upper thin portion 5b, and a left-lower thin portion 5c.

The left thick portion 5a is formed into generally a rectangular shape when viewed from the side at generally a center of the left wall 5 in up-down directions. The left thick portion 5a bulges toward inside as shown in FIG. 3 (a). The left thick portion 5a is formed so that thickness L1 (distance from the inner side face to the outer side face) is larger than the thickness of the left-upper thin portion 5b and the left-lower thin portion 5c.

The left-upper thin portion 5b is formed above and next to the left thick portion 5a as shown in the broken line in FIG. 2 and FIG. 3 (a). The left-upper thin portion 5b is formed into generally a rectangular shape extending in longitudinal direction when viewed from the side. The left-upper thin portion 5b has a length in up-down directions that is generally the same as the length in up-down directions of the first spacer 3.

The left-lower thin portion 5c is formed below and next to the left thick portion 5a, as shown in the broken line in FIG. 2 and FIG. 3 (a). The left-upper thin portion 5b is formed into generally a rectangular shape extending in longitudinal direction when viewed from the side. The left-lower thin portion 5c has a length in up-down directions that is generally the same as the length in up-down directions of the third spacer 4.

As shown in FIG. 2, a to-be-engaged portion 13 is provided at the other side end portion in longitudinal direction of the left wall 5.

The to-be-engaged portion 13 is provided so as to engage with the engagement portion 21 (described later) at the left-rear connecting portion 10 to keep the battery cover 1 tubular. The to-be-engaged portion 13 is formed to be thin and has generally a U-shape opening into one side in longitudinal direction. The to-be-engaged portion 13 integrally includes a first to-be-engaged portion 14, a second to-be-engaged portion 15 disposed below the first to-be-engaged portion 14 in spaced-apart relation, and an overlap portion 16 that connects the first to-be-engaged portion 14 and the second to-be-engaged portion 15.

The first to-be-engaged portion 14 has generally a rectangular shape when viewed from the side, and a first slit 18 for inserting a first projection portion 17 (described later) is formed at a center in up-down directions along up-down directions.

The second to-be-engaged portion 15 has generally a rectangular shape when viewed from the side, and a second slit 20 for inserting a second projection portion 19 (described later) is formed at a center in up-down directions along up-down directions. The length in up-down directions and the length in longitudinal direction of the second to-be-engaged portion 15 and the first to-be-engaged portion 14 are generally the same. The second slit 20 and the first slit 18 have generally the same length in up-down directions. That is, the shape of the second to-be-engaged portion 15 is generally the same as the shape of the first to-be-engaged portion 14.

The overlap portion 16 has generally a rectangular shape when viewed from the side, and is formed so that its length in longitudinal direction is shorter than the length in longitudinal direction of the first to-be-engaged portion 14.

The end portion of the first to-be-engaged portion 14, the second to-be-engaged portion 15, and the overlap portion 16 of the other side in longitudinal direction is formed to be flush.

The left-front connecting portion 9 is formed integrally with the left wall 5 at one side in longitudinal direction of the left wall 5.

The left-front connecting portion 9 is formed to be long and narrow in up-down directions, and integrally includes a second left-front spacer 9a as a second spacer, a left-front-upper thin portion 9b, a left-front-lower thin portion 9c, and two left-front bending portions 9d and 9e as bending portions.

The second left-front spacer 9a has generally a rectangular shape when viewed from the side along up-down directions, and is formed to be thick, bulging inwardly. The second left-front spacer 9a is formed so that its thickness L2 (distance from the inner side face to the outer side face) is larger than the thicknesses of the left-front-upper thin portion 9b and the left-front-lower thin portion 9c, and is the same as or smaller than the thickness of the left thick portion 5a.

The left-front-upper thin portion 9b is formed above and next to the second left-front spacer 9a, as shown in the broken line in FIG. 2 and FIG. 3 (b). The left-front-upper thin portion 9b is formed into generally a rectangular shape when viewed from the side. The left-front-upper thin portion 9b has a length in up-down directions that is generally the same as the length in up-down directions of the first spacer 3.

The left-front-lower thin portion 9c is formed below and next to the second left-front spacer 9a as shown in the broken line in FIG. 2 and FIG. 3 (b). The left-front-lower thin portion 9c is formed into generally a rectangular shape when viewed from the side. The left-front-lower thin portion 9c has a length in up-down directions that is generally the same as the length in up-down directions of the third spacer 4.

The two left-front bending portions 9d and 9e are formed next to the second left-front spacer 9a, the left-front-upper thin portion 9b, and the left-front-lower thin portion 9c on one side and the other side in longitudinal direction. The two left-front bending portions 9d and 9e are formed into lines extending in up-down directions to be thin. The length in up-down directions of the left-front bending portions 9d and 9e is the same as a total of the length in up-down directions of the second left-front spacer 9a, the left-front-upper thin portion 9b, and the left-front-lower thin portion 9c.

The second left-front spacer 9a is connected to the left wall 5 through one left-front bending portions 9d, and is connected to the front wall 7 through the other left-front bending portions 9e.

On one side in longitudinal direction of the left-front connecting portion 9, the front wall 7 is formed integrally with the left-front connecting portion 9.

The front wall 7 has generally a rectangular shape when viewed from the side having a length longer than the left wall 5 in longitudinal direction, and its upper end portion is cut in generally a U-shape opening toward above when viewed from the side. The front wall 7 integrally includes a front thick portion 7a, a front-upper thin portion 7b, and a front-lower thin portion 7c.

The front thick portion 7a is formed into generally a rectangular shape when viewed from the side at generally a center in up-down directions of the front wall 7. The front thick portion 7a bulges toward inside. The front thick portion 7a has a thickness (distance from the inner side face to the outer side face) that is generally the same as the thickness of the left thick portion 5a.

The front-upper thin portion 7b is formed above and next to the front thick portion 7a. The upper end edge of the front-upper thin portion 7b is formed into generally a U-shape along the upper end portion of the front wall 7.

The front-lower thin portion 7c is formed below and next to the front thick portion 7a as shown in the broken line in FIG. 2. The front-lower thin portion 7c is formed into generally a rectangular shape extending in the longitudinal directions when viewed from the side. The front-lower thin portion 7c has a length in up-down directions that is generally the same as the length in up-down directions of the third spacer 4.

On one side in longitudinal direction of the front wall 7, a right-front connecting portion 11 is formed integrally with the front wall 7.

The right-front connecting portion 11 is formed into generally the same shape as that of the left-front connecting portion 9 to be long and narrow in up-down directions, and integrally includes a second right-front spacer 11a as the second spacer, a right-front-upper thin portion 11b, a right-front-lower thin portion 11c, and two right-front bending portions 11d and 11e as bending portions.

The second right-front spacer 11a has generally a rectangular shape along the up-down directions when viewed from the side, and is formed to be thick, bulging toward inside. The second right-front spacer 11a has a thickness that is generally the same as the thickness of the second left-front spacer 9a.

The right-front-upper thin portion 11b is formed above and next to the second right-front spacer 11a, as shown in the broken line in FIG. 2. The right-front-upper thin portion 11b is formed into generally a rectangular shape when viewed from the side. The right-front-upper thin portion 11b has a length in up-down directions that is generally the same as the length in up-down directions of the first spacer 3.

The right-front-lower thin portion 11c is formed below and next to the second right-front spacer 11a, as shown in the broken line in FIG. 2. The right-front-lower thin portion 11c is formed into generally a rectangular shape when viewed from the side. The right-front-lower thin portion 11c has a length in up-down directions that is generally the same as the length in up-down directions of the third spacer 4.

The two right-front bending portions 11d and 11e are formed next to the second right-front spacer 11a, the right-front-upper thin portion 11b, and the right-front-lower thin portion 11c on one side and the other side in longitudinal direction. The two right-front bending portions 11d and 11e are formed into lines extending in up-down directions to be thin. The length in up-down directions of the right-front bending portions 11d and 11e is the same as a total of the length in up-down directions of the second right-front spacer 11a, the right-front-upper thin portion 11b, and the right-front-lower thin portion 11c.

The second right-front spacer 11a is connected to the front wall 7 through one right-front bending portions 11d, and is connected to the right wall 6 through the other right-front bending portions 11e.

On one side in longitudinal direction of the right-front connecting portion 11, the right wall 6 is formed integrally with the right-front connecting portion 11.

The right wall 6 has generally a rectangular shape when viewed from the side having a length in longitudinal direction that is generally the same as that of the left wall 5, and is shorter than the front wall 7. The right wall 6 integrally includes a right thick portion 6a, a right-upper thin portion 6b, and a right-lower thin portion 6c.

The right thick portion 6a is formed into generally a rectangular shape when viewed from the side at generally a center in up-down directions of the right wall 6. The right thick portion 6a bulges toward inside. The right thick portion 6a is formed so that its thickness is larger than those of the right-upper thin portion 6b and the right-lower thin portion 6c, and is formed to have generally the same thickness of the left thick portion 5a.

The right-upper thin portion 6b is formed above and next to the right thick portion 6a, as shown in the broken line in FIG. 2. The right-upper thin portion 6b is formed into generally a rectangular shape extending in longitudinal direction when viewed from the side, The right-upper thin portion 6b has a length in up-down directions that is generally the same as the length in up-down directions of the first spacer 3.

The right-lower thin portion 6c is formed below and next to the right thick portion 6a, as shown in the broken line in FIG. 2. The right-lower thin portion 6c is formed into generally a rectangular shape extending in the longitudinal direction when viewed from the side. The right-lower thin portion 6c has a length in up-down directions that is generally the same as the length in up-down directions of the third spacer 4.

On one side in longitudinal direction of the right wall 6, a right-rear connecting portion 12 is formed integrally with the right wall 6.

The right-rear connecting portion 12 is formed into generally the same shape as that of the left-front connecting portion 9 to be long and narrow in up-down directions, and integrally includes a second right-rear spacer 12a as the second spacer, a right-rear-upper thin portion 12b, a right-rear-lower thin portion 12c, and two right-rear bending portions 12d and 12e as bending portions.

The second right-rear spacer 12a has generally a rectangular shape along the up-down directions when viewed from the side, and is formed to be thick, bulging toward inside. The second right-rear spacer 12a has a thickness that is generally the same as the thickness of the second left-front spacer 9a.

The right-rear-upper thin portion 12b is formed above and next to the second right-rear spacer 12a, as shown in the broken line in FIG. 2. The right-rear-upper thin portion 12b is formed into generally a rectangular shape when viewed from the side. The right-rear-upper thin portion 12b has a length in up-down directions that is generally the same as the length in up-down directions of the first spacer 3.

The right-rear-lower thin portion 12c is formed below and next to the second right-rear spacer 12a, as shown in the broken line in FIG. 2. The right-rear-lower thin portion 12c is formed into generally a rectangular shape when viewed from the side. The right-rear-lower thin portion 12c has a length in up-down directions that is generally the same as the length in up-down directions of the third spacer 4.

The two right-rear bending portions 12d and 12e are formed next to the second right-rear spacer 12a, the right-front-upper thin portion 11b, and the right-front-lower thin portion 11c on one side and the other side in longitudinal direction. The two right-rear bending portions 12d and 12e are formed into lines extending in up-down directions to be thin. The length in up-down directions of the right-rear bending portions 12d and 12e is the same as a total of the length in up-down directions of the second right-rear spacer 12a, the right-rear-upper thin portion 12b, and the right-rear-lower thin portion 12c.

The second right-rear spacer 12a is connected to the right wall 6 through one right-rear bending portions 12d, and is connected to the rear wall 8 through the other right-rear bending portions 12e.

On one side in longitudinal direction of the right-rear connecting portion 12, the rear wall 8 is formed integrally with the right-rear connecting portion 12.

The rear wall 8 has generally a rectangular shape when viewed from the side having a length that is generally the same as that of the front wall 7 in longitudinal direction, and is longer than the right wall 6. The upper end portion of the rear wall 8 is cut in generally a U-shape opening toward above when viewed from the side so as to be shallower than the upper end portion of the front wall 7. The rear wall 8 integrally includes a rear thick portion 8a, a rear-upper thin portion 8b, and a rear-lower thin portion 8c.

The rear thick portion 8a is formed into generally a rectangular shape when viewed from the side at generally a center in up-down directions of the rear wall 8. The rear thick portion 8a bulges toward inside. The rear thick portion 8a has a thickness that is generally the same as the thickness of the left thick portion 5a.

The rear-upper thin portion 8b is formed above and next to the rear thick portion 8a. The upper end edge of the rear-upper thin portion 8b is formed into generally a U-shape along the upper end portion of the rear wall 8.

The rear-lower thin portion 8c is formed below and next to the rear thick portion 8a, as shown in the broken line in FIG. 2. The rear-lower thin portion 8c is formed into generally a rectangular shape extending in the longitudinal direction when viewed from the side. The rear-lower thin portion 8c has a length in up-down directions that is generally the same as the length in up-down directions of the third spacer 4.

On one side in longitudinal direction of the rear wall 8, a left-rear connecting portion 10 is formed integrally with the rear wall 8.

The left-rear connecting portion 10 is formed into generally the same shape as that of the left-front connecting portion 9 to be long and narrow in up-down directions, and includes a second left-rear spacer 10a as the second spacer, a left-rear-upper thin portion 10b, a left-rear-lower thin portion 10c, and two left-rear bending portions 10d and 10e as bending portions.

The second left-rear spacer 10a has generally a rectangular shape along the up-down directions when viewed from the side, and is formed to be thick, bulging toward inside. The second left-rear spacer 10a has a thickness that is generally the same as the thickness of the second left-front spacer 9a.

The left-rear-upper thin portion 10b is formed above and next to the second left-rear spacer 10a, as shown in the broken line in FIG. 2. The left-rear-upper thin portion 10b is formed into generally a rectangular shape when viewed from the side. The left-rear-upper thin portion 10b has a length in up-down directions that is generally the same as the length in up-down directions of the first spacer 3.

The left-rear-lower thin portion 10c is formed below and next to the second left-rear spacer 10a, as shown in the broken line in FIG. 2. The left-rear-lower thin portion 10c is formed into generally a rectangular shape when viewed from the side. The left-rear-lower thin portion 10c has a length in up-down directions that is generally the same as the length in up-down directions of the third spacer 4.

The two left-rear bending portions 10d and 10e are formed next to the second left-rear spacer 10a, the left-rear-upper thin portion 10b, and the left-rear-lower thin portion 10c on one side and the other side in longitudinal direction. The two left-rear bending portions 10d and 10e are formed into lines extending in up-down directions to be thin. The length in up-down directions of the left-rear bending portions 10d and 10e is the same as a total of the length in up-down directions of the second left-rear spacer 10a, the left-rear-upper thin portion 10b, and the left-rear-lower thin portion 10c.

The second left-rear spacer 10a is connected to the rear wall 8 through one left-rear bending portions 10d, and is connected to an engagement portion 21 (described later) through the other left-rear bending portions 10e.

The left-rear connecting portion 10 includes the engagement portion 21 at its one end portion in longitudinal direction. The engagement portion 21 is formed to be thin, and includes a first projection portion 17 and a second projection portion 19 on one side in longitudinal direction thereof.

The first projection portion 17 projects in one longitudinal direction at an upper portion of the engagement portion 21, and integrally includes a first projection 24 having generally a rectangular shape when viewed from the side, and a head portion 25 bulging upward or downward from one end portion in the longitudinal direction of the first projection 24.

The first projection 24 is formed so as to have a length in up-down directions that is generally the same as the length in up-down directions of the first slit 18.

The second projection portion 19 is provided below the first projection portion 17 in spaced-apart relation, and is formed to project toward one longitudinal direction of the engagement portion 21. The second projection portion 19 is formed into a shape that is generally the same as that of the first projection portion 17. That is, the second projection portion 19 projects in one longitudinal direction at a lower portion of the engagement portion 21, and integrally includes a second projection 26 having generally a rectangular shape when viewed from the side, and a second head portion 27 bulging upward or downward from one end portion in the longitudinal direction of the second projection 26.

The second projection 26 is formed so as to have a length in up-down directions that is generally the same as the length in up-down directions of the second slit 20.

Each of the four connecting portions 23 (the left-front connecting portion 9, left-rear connecting portion 10, right-front connecting portion 11, and right-rear connecting portion 12) forms folding portions 28, allowing the battery cover 1 to be folded so that the inner side face of the side wall 2 makes contact.

The first spacer 3 is provided at the upper end edge of the inner side face of each of the side walls 2 and each of the connecting portions 23 of the battery cover 1. To be more specific, the first spacer 3 is provided continuously along the upper end edge of the inner side face of the left-upper thin portion 5b, the left-front-upper thin portion 9b, the front-upper thin portion 7b, the right-front-upper thin portion 11b, the right-upper thin portion 6b, the right-rear-upper thin portion 12b, the rear-upper thin portion 8b, and the left-rear-upper thin portion 10b. The first spacer 3 is disposed on the side walls 2 and the connecting portions 23 so that the upper end portion of the side walls 2 and the connecting portions 23 is flush with the upper end portion of the first spacer 3.

The inner side face of the first spacer 3 is positioned at an inner side than the inner side face of the thick portion (left thick portion 5a, right thick portion 6a, front thick portion 7a, and rear thick portion 8a) of the side walls 2, and is positioned at an inner side than the inner side face of the second spacer (second left-front spacer 9a, second left-rear spacer 10a, second right-front spacer 11a, and second right-rear spacer 12a) of the connecting portions 23.

The first spacer 3 is formed into generally a rectangular shape extending in the longitudinal direction when viewed in cross section, and is formed from foam (sponge).

On the lower end edge of the inner side face of the side walls 2 and the connecting portions 23 of the battery cover 1, a third spacer 4 is provided. To be more specific, the third spacer 4 is provided continuously along the lower end edge of the inner side face of the left-lower thin portion 5c, the left-front-lower thin portion 9c, the front-lower thin portion 7c, the right-front-lower thin portion 11c, the right-lower thin portion 6c, the right-rear-lower thin portion 12c, the rear-lower thin portion 8c, and the left-rear-lower thin portion 10c. The third spacer 4 is disposed on the side walls 2 and the connecting portions 23 so that the lower end face of the side wall 2 and the connecting portion 23 is flush with the lower end face of the third spacer 4.

The inner side face of the third spacer 4 is positioned at an inner side than the inner side face of the thick portion (left thick portion 5a, right thick portion 6a, front thick portion 7a, and rear thick portion 8a) of the side walls 2, and is positioned at an inner side than the inner side face of the second spacer (second left-front spacer 9a, second left-rear spacer 10a, second right-front spacer 11a, and second right-rear spacer 12a) of the connecting portions 23.

The third spacer 4 is formed into generally a rectangular shape extending in the longitudinal direction when viewed in cross section. The third spacer 4 is formed from the same material as that of the first spacer 3, that is, from foam (sponge).

### 2. Battery cover production method

First, a cover material having heat-insulating properties and including the foam layer (shown in reference numeral 39 in FIG. 1 and FIG. 3 (a) to FIG. 3 (b)) and the skin (shown in reference numeral 40 in FIG. 1 and FIG. 3 (a) to FIG. 3 (b)) laminated on both sides of the foam layer is prepared.

Examples of the foam layer include polyurethane foam, polystyrene foam, polyolefin foam, chloroprene foam, and polyester foam. Use of the foam layer allows the battery cover to have excellent heat-insulating properties. Of these examples of the foam layer, preferably, polyurethane foam is used in view of moldability and heat-insulating properties.

Examples of the skin include polyester felt impregnated with a thermosetting resin, and a mixture of rayon, and polyester, nylon, polypropylene. Examples of the thermosetting resin include phenol resin and resorcinol resin.

For the foam layer and skin, ethylene-propylene-diene rubber foam (EPDM foam) having heat resistance, and a stretch member such as silicone foam can also be used. Use of these allows for the battery cover to expand outwardly when inserting the battery to the battery cover, making the insertion of the battery easy.

The foam layer has a thickness of, for example, 1 mm or more, preferably 5 mm or more, and for example, 20 mm or less, preferably 15 mm or less.

The skin has a thickness of, for example, 0.05 mm or more, preferably 0.3 mm or more, and for example, 1.5 mm or less, preferably 1 mm or less.

The cover material as a whole has a thickness (corresponds to the thickness of the thick portions) of, for example, 1 mm or more, preferably 5 mm or more, and for example, 20 mm or less, preferably 15 mm or less.

Then, predetermined portions of the cover material are thermocompressed to form the thin portion. To be specific, one side (inner side face) of the cover material is compressed with a heating plate having a shape corresponding to the thin portions so as to produce the thin portions (left-upper thin portion 5b, left-front-upper thin portion 9b, front-upper thin portion 7b, right-front-upper thin portion 11b, right-upper thin portion 6b, right-rear-upper thin portion 12b, rear-upper thin portion 8b, and, left-rear-upper thin portion 10b, left-lower thin portion 5c, left-front-lower thin portion 9c, front-lower thin portion 7c, right-front-lower thin portion 11c, right-lower thin portion 6c, right-rear-lower thin portion 12c, rear-lower thin portion 8c, left-rear-lower thin portion 10c, left-front bending portions 9d and 9e, left-rear bending portions 10d and 10e, right-front bending portions 11d and 11e, right-rear bending portions 12d and 12e, engagement portion 21, and to-be-engaged portion 13). The formation of the thin portions allows for easy formation of the bending portions, cushioning, and avoidance of contacts with the surrounding portions.

The heating plate has a temperature of, for example, 120°C or more, preferably 140°C or more, and for example, 230°C or less, preferably 200°C or less.

The left thick portion 5a has thickness L1 of, to be specific, for example, 5 mm or more, preferably 10 mm or more, and for example, 20 mm or less, preferably 15 mm or less. The front thick portion 7a, the right thick portion 6a, and the rear thick portion 8a have a thickness of the above-described range.

The second left-front spacer 9a has thickness L2 of, to be specific, for example, 1 mm or more, preferably 2 mm or more, and for example, 15 mm or less, preferably 10 mm or less. The second right-front spacer 11a, the second right-rear spacer 12a, and the second left-rear spacer 10a have a thickness of the above-described range.

Each of the thin portion has a thickness of generally the same, to be specific, for example, 0.1 mm or more, preferably 0.5 mm or more, and for example, 2 mm or less, preferably 1.5 mm or less.

Each of the bending portions (left-front bending portions 9d and 9e, left-rear bending portions 10d and 10e, right-front bending portions 11d and 11e, and right-rear bending portions 12d and 12e) has a length in longitudinal direction of, for example, to be specific, for example, 2 mm or more, preferably 6 mm or more, and for example, 35 mm or less, preferably 20 mm or less.

Then, trimming is performed. To be more specific, the cover material is cut along the outer side of the thin portions.

In this manner, a battery cover wall material in which the left wall 5, the left-front connecting portion 9, the front wall 7, the right-front connecting portion 11, the right wall 6, the right-rear connecting portion 12, the rear wall 8, and the left-rear connecting portion 10 are integrally molded in this sequence is produced.

Then, an elongated first spacer 3 having generally a rectangular shape when viewed from the side is bonded along the upper end edge of the inner side face of the battery cover wall material.

The first spacer 3 is formed from foam. Examples of the foam include ethylene-propylene-diene rubber foam (EPDM foam), ethylene-propylene foam (EPM foam), polyurethane foam, polystyrene foam, polyolefin foam, and chloroprene foam. Preferably, EPDM foam is used.

The first spacer 3 has a thickness (distance from the innermost side to the outermost side) of, for example, 1 mm or more, preferably 5 mm or more, and for example, 15 mm or less, preferably 10 mm or less. The first spacer 3 has a length in up-down directions of, for example, 3 mm or more, preferably 7 mm or more, and for example, 15 mm or less, preferably 10 mm or less.

Then, the elongated third spacer 4 having generally a rectangular shape when viewed from the side is bonded along the lower end edge of the inner side face of the battery cover wall material.

The third spacer 4 is formed from foam. Examples of the foam include those shown as examples of the first spacer 3. Preferably, EPDM foam is used. The third spacer 4 has a thickness and a length in up-down directions of generally the same as the thickness and the length in up-down directions of the first spacer 3.

Then, by inserting the first projection portion 17 and the second projection portion 19 of the left-rear connecting portion 10 to the first slit 18 and the second slit 20 of the left wall 5, respectively, the prismatic battery cover 1 in which the left wall 5 and the left-rear connecting portion 10 are connected is produced.

To be specific, as described above, the battery cover 1 is formed into generally a rectangular shape elongated in left-right directions when viewed from the top, the front wall 7 and the rear wall 8 facing each other in spaced-apart relation in front-back directions, and the left wall 5 and the right wall 6 facing each other in spaced-apart relation in left-right directions.

Then, at the four corners of the battery cover 1, the side walls 2 (front wall 7 and left wall 5; left wall 5 and rear wall 8; rear wall 8 and right wall 6; and right wall 6 and front wall 7) that are disposed next to each other generally at right angles are connected through the connecting portions 23 (left-front connecting portion 9; left-rear connecting portion 10; right-front connecting portion 11; and right-rear connecting portion 12), At the connecting portions 23, the two bending portions (left-front bending portions 9d and 9e, left-rear bending portions 10d and 10e, right-front bending portions 11d and 11e, and right-rear bending portions 12d and 12e) sandwiching the second spacer (second left-front spacer 9a, second left-rear spacer 10a, second right-front spacer 11a, and second right-rear spacer 12a) are bent to allow for the side walls 2 that are next to each other to be disposed at generally right angles.

That is, one side wall 2 (e.g., front wall 7) of the side walls 2 that are next to each other is connected to the connecting portion 23 (e.g., left-front connecting portion 9) so that an obtuse angle (e.g., 100 to 175 degrees, preferably 120 to 150 degrees, most preferably 135 degrees) is formed inside the prismatic shape by bending at one bending portion (e.g., left-front bending portion 9e). The other side wall 2 (e.g., left wall 5) of the side walls 2 that are next to each other is connected to the other connecting portion 23 (e.g., left-front connecting portion 9) so that an obtuse angle is formed inside the prismatic shape by bending at the other bending portion (e.g., bending portion 9d).

In this manner, by forming the two angles (obtuse angles) with the connecting portion 23 and the side walls 2 that are disposed next to each other at generally right angles, each of the four corners is formed into generally a trapezoid when viewed from the top,

### 3. Battery insertion

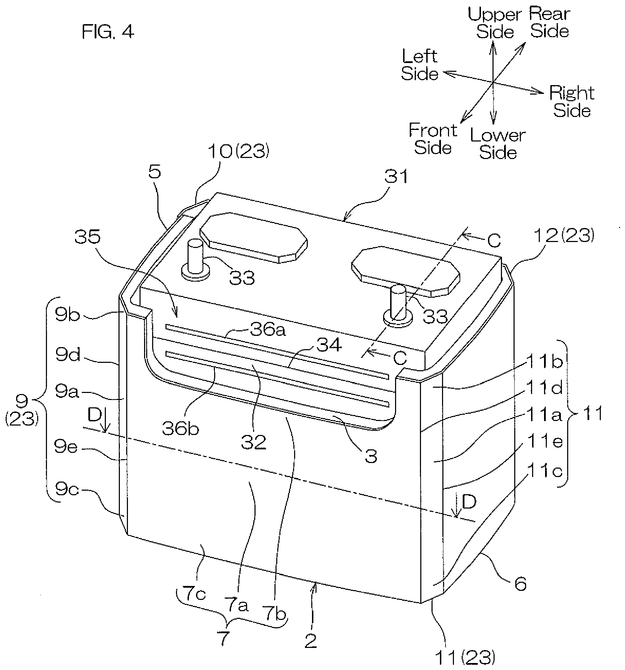

As shown in FIG. 4, a battery 31 is a secondary battery boarded on, for example, vehicles and ships, and is filled with a battery fluid 32 therein.

The battery 31 is formed into generally a rectangular parallelepiped shape. Two terminals 33 are provided on the top face of the battery 31. A battery fluid detection portion 35 is provided at the front face thereof to visually see a battery fluid interface 34 from outside. The battery fluid detection portion 35 is marked with an upper limit scale 36a showing the upper limit of the filled amount of the battery fluid 32 and a lower limit scale 36b showing the lower limit of the filled amount of the battery fluid 32. The battery 31 is filled with the battery fluid 32 so that the battery fluid interface 34 is positioned between the upper limit scale and the lower limit scale.

The battery cover 1 is attached to the battery 31 so that the side face (front face) including the battery fluid detection portion 35 of the battery 31 faces the front wall 7 of the battery cover 1. When the battery cover 1 is attached to the battery 31, the battery fluid detection portion 35 is exposed from the upper end portion of the front wall 7 that is cut out into generally a U-shape.

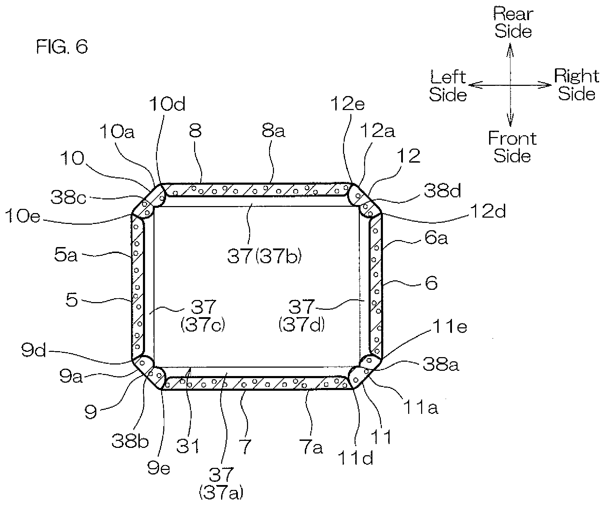

As shown in FIG. 5 and FIG. 6, the battery cover 1 is formed so that the space defined from the four side walls 2 (inner side face) of the battery cover 1 is slightly larger than the side faces of the battery 31.

As shown in FIG. 6, at four corners of the battery cover 1, by bending the two bending portions (left-front bending portions 9d and 9e, left-rear bending portions 10d and 10e, right-front bending portions 11d and 11e, and right-rear bending portions 12d and 12e), the peripheral shape of the battery cover 1 is formed into a shape having the four corners chamfered with oblique angles, that is, generally octagon when viewed from the top. Then, at the inner periphery of the battery cover 1, the four corner portions (particularly, four second spacers composed of the second left-front spacer 9a, second left-rear spacer 10a, second right-front spacer 11a, and second right-rear spacer 12a) are projected inward. Therefore, when the battery 31 is inserted into the battery cover 1, the four second spacers are brought into contact with the four corners 38 (angles: 38a, 38b, 38c, 38d) of the battery side faces, thereby fixing the battery cover 1 to the battery 31.

The first spacer 3 is brought into contact with the upper portion of the side faces of the battery 31, and the third spacer 4 is brought into contact with the lower portion of the side faces of the battery 31. To be specific, the inner side face of the first spacer 3 is brought into contact with the side faces of the battery 31 entirely in the circumferential direction, and the inner side face of the third spacer 4 is brought into contact with the side faces of the battery 31 entirely in the circumferential direction.

The bottom of the battery 31 is flush with the lower end face of the third spacer 4 and the lower end face of the side wall 2 of the battery cover 1.

Then, four enclosed spaces 37 (air layer) are defined by the inner side face of the side wall 2 of the battery cover 1, the side face of the battery 31, the first spacer 3, the second spacer, and the third spacer 4.

To be specific, in front of the battery 31, the first spacer 3, the second left-front spacer 9a, the second right-front spacer 11a, the third spacer 4, the front wall 7, and the front face of the battery 31 define a front space 37a. In back of the battery 31, the first spacer 3, the second left-rear spacer 10a, the second right-rear spacer 12a, the third spacer 4, the rear wall 8, and the rear side face of the battery define a rear space 37b. In left of the battery 31, the first spacer 3, the second left-front spacer 9a, the second left-rear spacer 10a, the third spacer 4, the left wall 5, and the left side face of the battery 31 define a left space 37c. In right of the battery 31, the first spacer 3, the second right-front spacer 11a, the second right-rear spacer 12a, the third spacer 4, the right wall 6, and the right side face of the battery define a right space 37d.

The space 37 has a distance (distance between the inner side face of the side wall 2 of the battery cover 1 and the side face of the battery 31) is, for example, 1 mm or more, preferably 3 mm or more, and for example, 15 mm or less, preferably 10 mm or less.

### 4. Folding

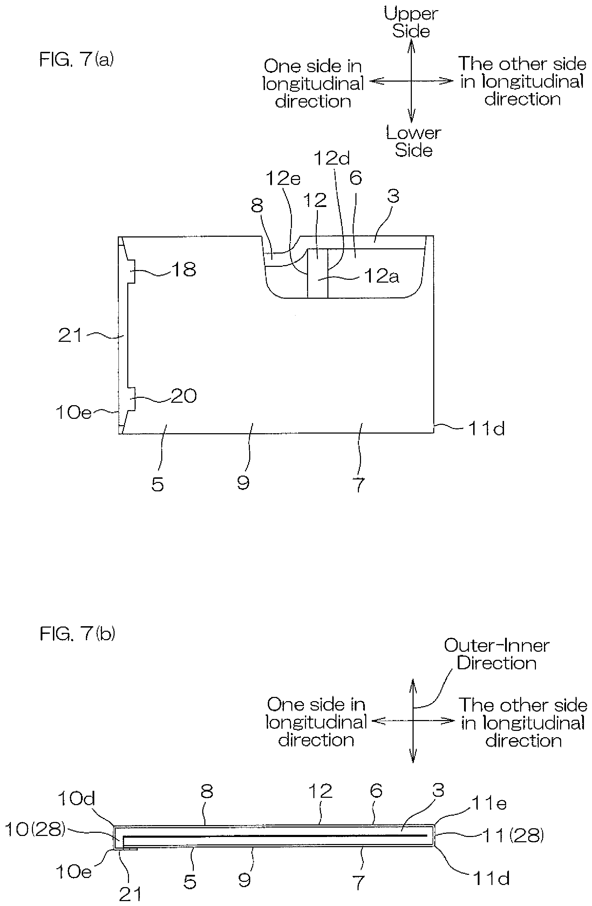

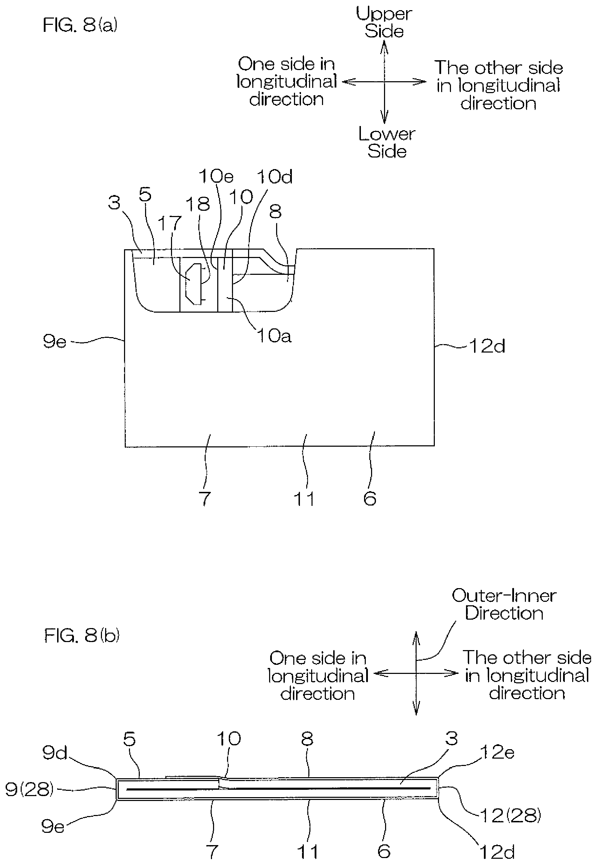

The battery cover 1 can be folded, as shown in FIG. 7 (a) to FIG. 7 (b) or FIG. 8 (a) to FIG. 8 (b).

To be specific, in FIG. 7 (a) to FIG. 7 (b), by bending the right-front bending portions 11d and 11e of the right-front connecting portion 11 and the left-rear bending portions 10d and 10e of the left-rear connecting portion 10, and extending the left-front bending portions 9d and 9e of the left-front connecting portion 9 and the right-rear bending portions 12d and 12e of the right-rear connecting portion 12, the front wall 7, the left-front connecting portion 9, and the left wall 5 become continuously flat, and the rear wall 8, the right-rear connecting portion 12, and the right wall 6 become continuously flat, and they are folded so as to lie on top of one another.

At this time, at the right-front connecting portion 11, and at the front wall 7 and the right wall 6 that are connected at both sides of the right-front connecting portion 11, the first spacer 3 and the third spacer 4 are bent into generally a U-shape when viewed from the top along the two right-front bending portions 11d and 11e.

Meanwhile, in FIG. 8 (a) to FIG. 8 (b), by bending the left-front bending portions 9d and 9e of the left-front connecting portion 9 and the right-rear bending portions 12d and 12e of the right-rear connecting portion 12, and extending the right-front bending portions 11d and 11e of the right-front connecting portion 11 and the left-rear bending portions 10d and 10e of the left-rear connecting portion 10, the front wall 7, the right-front connecting portion 11, and the right wall 6 become continuously flat and the rear wall 8, the left-rear connecting portion 10, and the left wall 5 become continuously flat, and they are folded so as to lie on top of one another.

At this time, at the left-front connecting portion 9, and at the front wall 7 and the left wall 5 that are connected at both sides of the left-front connecting portion 9, the first spacer 3 and the third spacer 4 are bent into generally a U-shape when viewed from the top along the two left-front bending portions 9d and 9e.

### 5. Operations and effects

Then, the battery cover 1 includes the side walls 2 (left wall 5, right wall 6, front wall 7, and rear wall 8) covering the four side faces of the battery 31 and the first spacer 3 provided at the upper portion of the side wall 2, and therefore a space 37 (air layer) is created between the side faces of the battery 31 and the side walls 2 of the battery cover 1.

Therefore, heat conducted to the side walls 2 of the battery cover 1 from outside is not directly conducted to the side faces of the battery 31 through the battery cover 1. As a result, the battery cover 1 has excellent heat-insulating properties, and can protect the battery 31 from outside heat effectively.

Furthermore, in the battery cover 1, the second spacer (second left-front spacer 9a, second left-rear spacer 10a, second right-front spacer 11a, and second right-rear spacer 12a) is provided on the side wall 2 along up-down directions to be brought into contact with the side face of the battery 31 along up-down directions.

Therefore, the space 37 between the side wall 2 of the battery cover 1 and the side face of the battery 31 can be kept.

To be specific, in the battery cover 1, when the battery cover 1 is attached to the battery 31, the second spacer is provided on the side wall 2 so that the second spacer is brought into contact with the corners 38 (38a, 38b, 38c, and 38d) of the side faces of the battery.

Therefore, the corners 38 of the side face of the battery 31 have high strength, and therefore the battery cover 1 can be more reliably attached to the battery 31.

To be specific, the four second spacers (second left-front spacer 9a, second left-rear spacer 10a, second right-front spacer 11a, and second right-rear spacer 12a) are provided on the side wall 2 so that the four second spacers are brought into contact with the four corners 38 of the side face of the battery 31.

Therefore, the second spacer is brought into contact with the four corners 38a, 38b, 38c, and 38d of the battery 31, and therefore the battery cover 1 can be more reliably attached to the battery 31, while keeping the space 37 between the side wall 2 of the battery cover 1 and the side face of the battery 31.

That is, the battery cover 1 forms generally an octagon when viewed from the top with the side walls 2 (left wall 5, right wall 6, front wall 7, and rear wall 8) and the connecting portions 23 (left-front connecting portion 9, left-rear connecting portion 10, right-front connecting portion 11, and right-rear connecting portion 12). Therefore, a space can be reliably formed between the side walls 2 of the battery cover 1 and the side faces of the battery 31.

More specifically, when the battery cover 1 is attached to the battery 31, as described above, four spaces (37a, 37b, 37c, and 37d) are defined. Therefore, the space 37 can be formed and saved more reliably between the battery cover 1 and the battery 31.

Furthermore, in the battery cover 1, the four folding portions 28 (left-front connecting portion 9, left-rear connecting portion 10, right-front connecting portion 11, and right-rear connecting portion 12) are provided in spaced-apart relation to each other. Therefore, the battery cover 1 can be folded so that the inner side faces of the side wall 2 are brought into contact, and therefore the battery cover can be carried and stored in a compact size.

More specifically, in the battery cover 1, each of the folding portions 28 includes two bending portions (left-front bending portions 9d and 9e, left-rear bending portions 10d and 10e, right-front bending portions 11d and 11e, and right-rear bending portions 12d and 12e). Therefore, two angles can be formed at each of the corners of the battery cover 1 when the battery cover 1 is prismatic upon attaching the battery cover 1 to the battery 31. Therefore, the battery cover 1 can be formed into generally an octagon when viewed from the top as described above, and a space can be reliably formed between the side walls 2 of the battery cover 1 and the side faces of the battery 31.

Furthermore, when the battery cover 1 is folded, the side walls 2 facing each other can keep a predetermined distance at the folding portions 28, and therefore stress caused by contacts between the first spacers 3 provided at the inner side face of the side walls 2 can be eased, As a result, damages to the first spacer 3 can be reduced when the battery cover 1 is folded and stored.

Furthermore, in the battery cover 1, the side wall 2 includes a foam layer formed from a heat insulating material, and therefore heat-insulating properties of the battery cover 1 further improve. Therefore, further protection of the battery 31 from heat can be achieved.

To be specific, the side wall 2 includes the foam layer and the skin laminated on both sides of the foam layer, and therefore heat-insulating properties of the battery cover 1 further improve. Therefore, further protection of the battery 31 from heat can be achieved.

### <Second embodiment>

As shown in FIG. 9, the battery cover 1 of the second embodiment includes the opening 41 and the flap 42 as the outside air intake mechanism for introducing outside air to the space 37.

The opening 41 is formed generally rectangular when viewed from the side, is penetrating the front wall 7 in the thickness direction at generally a center of the front wall 7, and allows for communication between the outside and inside of the space.

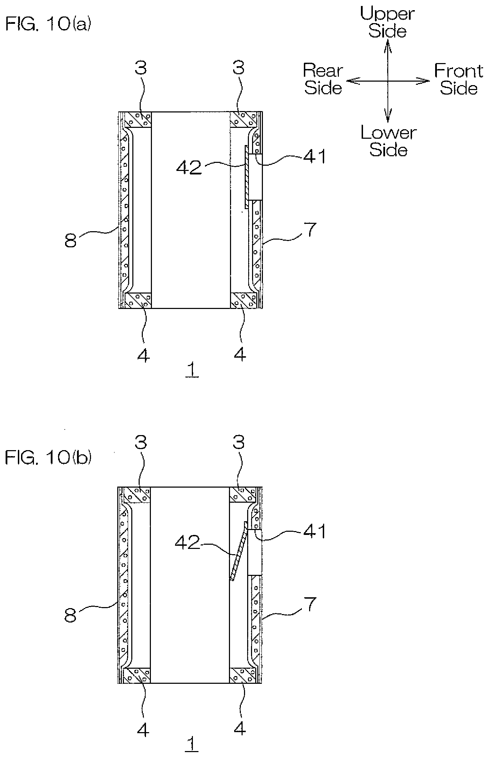

The flap 42 is composed of a flexible material such as an elastic film, and is formed into generally a rectangular flat plate shape slightly larger than the opening 41. The flap 42 is disposed so as to cover the opening 41 from the inner side face of the front wall 7. As shown in FIG. 10 (a), the upper end portion of the flap 42 is fixed at the inner side face of the front wall 7 above the opening 41, and the peripheral end portion (left end portion, right end portion, and lower end portion) excluding the upper end portion of the flap 42 is detachably in contact with the peripheral edge portion of the opening 41 of the front wall 7.

Then, the battery cover 1 is attached to the battery 31 so that the opening 41 faces the front side of the vehicle. As shown in FIG. 10 (b), when air flows in from the front side, the flap 42 swings toward the rear side with the upper end portion as the supporting point to open the opening 41.

Therefore, the flap 42 closes the opening 41 when the vehicle is not moving, and the flap 42 opens the opening 41, as described above, to introduce the outside air into the space 37 when the vehicle is moving.

Such a battery cover 1 includes the opening 41 allowing communication between outside and inside of the space 37, and the flap 42 that opens and closes the opening 41. Therefore, opening of the flap 42 suitably allows for introducing of fresh air from the opening 41 into the space 37. As a result, the battery 31 can be cooled rapidly and reliably.

Although not shown, a ventilation fan can be further provided inside the opening 41.

### <Third embodiment>

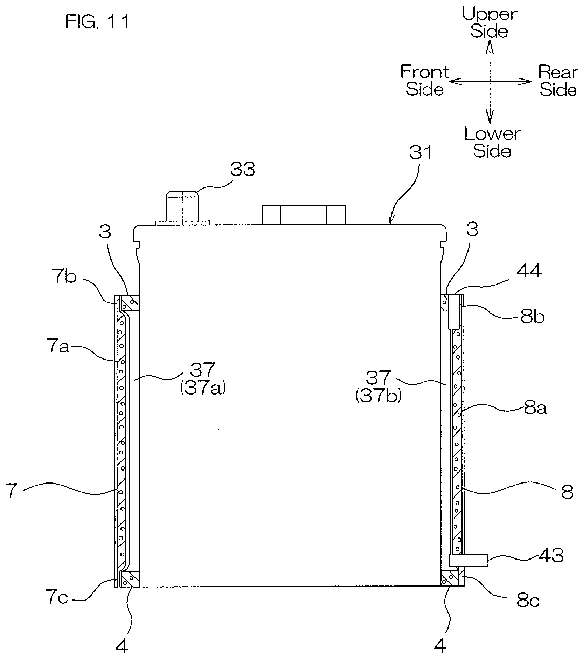

As shown in FIG. 11, the battery cover 1 of the third embodiment includes two openings that allows for communication between the outside and inside of the space 37, i.e., a first opening 43 and a second opening 44 as the outside air intake mechanism for introducing outside air into the space 37.

The first opening 43 is provided as an inlet, penetrates the front wall 7 in the thickness direction at a lower portion thereof, and allows for communication between the inner side face and the outer side face of the front wall 7. The first opening 43 is cylindrical, and is disposed so that its axis direction extends in front-back directions. The first opening 43 has a drinking straw structure or a check valve structure, and allows for outside air to flow inside (space 37) in one direction.

The second opening 44 is provided as an outlet, disposed at an upper portion of the front wall 7 between the first spacer 3 and the inner side face of the front wall 7, and allows for communication between the inner side face and the outer side face of the first spacer 3. The second opening 44 is cylindrical, and is disposed so that its axis direction extends in up-down directions. The second opening 44 has a drinking straw structure or a check valve structure, and allows for inside (space 37) air to flow to outside in one direction.

Then, with the battery cover 1, the first opening 43 and the second opening 44, and the members (front wall 7, battery front face, first spacer 3, second left-front spacer 9a, second right-front spacer 11a, and third spacer 4) defining the front space configures a pump structure. Therefore, when the vehicle is moving, the outside air can be introduced into the space 37 and the internal air of the space 37 discharged in the sequence from the first opening 43, the space 37, and the second opening 44.

The battery cover 1 includes two openings of the first opening 43 and the second opening 44 that allow for communication between the inside and outside of the space 37, and therefore fresh air can be introduced from the first opening 43 to inside the space 37, and the internal air of the space 37 can be discharged to the outside from the second opening 44 to reliably cool the battery 31.

To be specific, in the battery cover 1, the first opening 43 is provided in the side wall 2, and the second opening 44 is provided in the first spacer 3, and therefore the first opening 43 works as an inlet and the second opening 44 works as an outlet. Therefore, fresh air can be introduced from the first opening 43, and discharged from the second opening 44, and therefore a pathway for fresh air can be formed inside the space 37. As a result, the battery 31 can be cooled efficiently.

### <Fourth embodiment>

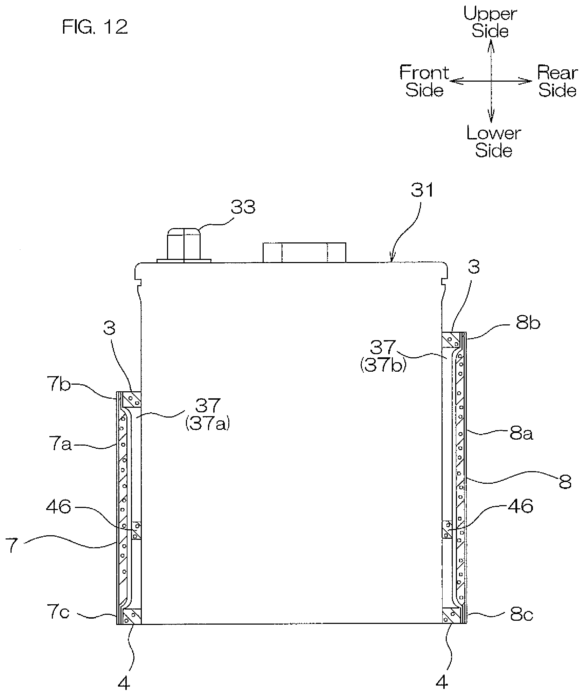

As shown in FIG. 12, the battery cover 1 of the fourth embodiment includes a fourth spacer 46 at generally a center in up-down directions on the inner side face of the side wall 2 of the battery cover 1. The fourth spacer 46 is formed into generally a rectangular shape when viewed in cross section, and the inner side face of the fourth spacer 46 makes contact with the side faces of the battery 31 when the battery 31 is inserted.

The fourth spacer 46 can be formed into generally a rectangular frame when viewed from the top on the entire side wall 2 (that is, left wall 5, right wall 6, front wall 7, and rear wall 8) of the battery cover 1, or can be formed on a portion of the side wall 2 (e.g., front wall 7 and rear wall 8) of the battery cover 1.

By providing the fourth spacer 46 in this manner, the gap between the battery cover 1 and the battery 31 can be ensured in each of the spaces 37, improving heat-insulating properties.

### <Fifth embodiment>

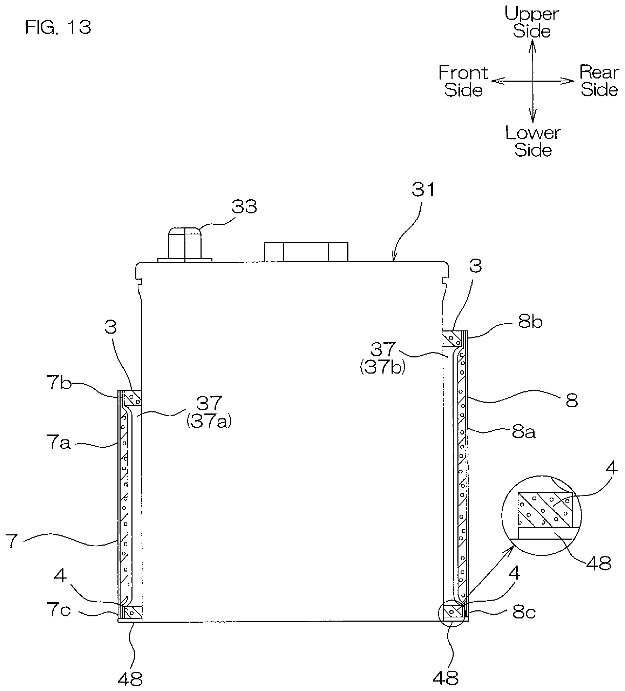

As shown in FIG. 13, the battery cover 1 of the fifth embodiment includes a slippery film 48 at its bottom,

The slippery film 48 is formed into generally a rectangular frame along the third spacer 4, the side wall 2, and the connecting portion 23 when viewed from the bottom. The slippery film 48 is formed from a material of, for example, polyester (PET), polyethylene (PE), and polypropylene (PP).

By providing the slippery film 48, the battery cover 1 can be attached to the battery 31 easily from above.

### <Sixth embodiment and seventh embodiment>

As shown in FIG. 14 (a), in the battery cover 1 of the sixth embodiment, the first spacer 3a has a fin structure extending toward slightly upward as it extends from the outside to inside and having flexibility in up-down directions. The first spacer 3a in the fifth embodiment is formed from materials such as, for example, rubber, and olefin.

As shown in FIG. 14 (b), in the battery cover 1 of the seventh embodiment, the first spacer 3b is formed integrally with the side wall 2. That is, the first spacer 3b is formed by bending the upper end portion of the side wall 2 of the battery cover 1 toward inside. The first spacer 3 is formed so as to extend upward as it extends from outside to the inside.

In the sixth embodiment and seventh embodiment, the first spacer 3b is generally a rectangular frame when viewed from the top, and is formed on the entire side wall 2, and is disposed so as to contact the entire side faces of the battery 31.

Although not shown, the third spacer 4 can also be formed in the same manner as the first spacer 3 of the sixth embodiment or the seventh embodiment.

### <Eighth embodiment>

In the battery cover 1 of the eighth embodiment, although not shown, a stretch spacer as a stretch portion is used as the second spacer. The stretch spacer is formed from, for example, a material that expand by tensile stress, and a material that shrinks by heat.

The stretch spacer is provided so as to make contact with corners 38 of the side faces of the battery 31 when the battery cover 1 is attached to the battery 31.

When the second spacer is a stretch spacer, the battery cover 1 can be attached to the batteries 31 having different sizes. Furthermore, before the attachment, a gap can be generated between the battery 31 and the battery cover 1, and therefore the battery cover 1 can be attached around the battery 31 easily. Meanwhile, after the attachment, the battery cover 1 can be shrunk, and therefore the battery cover 1 can be tightly fitted to and fixed to the battery easily. Furthermore, contractibility of the stretch spacer allows for reduction in the area of the material of the battery cover 1.

In the eighth embodiment, the stretch spacer can be used for all of the four second spacers, can be used for one of the four second spacers, or can be used partially.

### <Ninth embodiment>

As shown in FIG. 15, in the battery cover 1 of the ninth embodiment, for example, a stretch connecting member 51 as a stretch portion is used for the connecting portion 23.

The stretch connecting member 51 has generally a rectangular shape when viewed from the side extending in up-down directions, and is formed to be thin.

The stretch connecting member 51 has a slit portion 53 formed therein.

The plurality of slit portions 53 are formed in spaced-apart relation to each other in up-down directions. Each of the slit portions 53 extend in up-down directions, and is formed so as to penetrate the stretch connecting member 51 in the thickness direction thereof, The plurality of slit portions 53 form slit lines 52 of lines (straight lines) in the whole stretch connecting member 51 in up-down directions. The plurality of slit lines 52 are disposed in parallel in longitudinal direction in spaced-apart relation. In each of the slit lines 52, a joint portion 54 that connects the slit portions 53 that are next to each other in up-down directions is formed.

A connection protection member 55 is provided on the outside of the stretch connecting member 51. The connection protection member 55 is an elastic body having heat-insulating properties, and is formed into generally a rectangular shape when viewed from the side. The connection protection member 55 is formed so that its length in up-down directions and length in longitudinal direction are the length in up-down directions and the length in longitudinal direction of the stretch connecting member 51, respectively.

When the connecting portion 23 is the stretch connecting member 51, the battery cover 1 can be attached to the batteries 31 having different sizes, That is, the battery cover 1 can be elongated in the longitudinal direction, and therefore before the attachment, a gap can be generated between the battery 31 and the battery cover 1. Therefore, the battery cover 1 can be attached around the battery 31 easily. Meanwhile, after the attachment, the battery cover 1 can be shrunk, and therefore the battery cover 1 can be tightly fit and fixed to the battery 31 easily. Furthermore, contractibility of the stretch spacer allows for reduction in the area of the material of the battery cover 1.

Furthermore, by providing the connection protection member 55, air can be prevented from escaping from the cut portion 52, improving sealing properties and heat-insulating properties of the battery cover 1.

In the ninth embodiment, the stretch connecting member 51 can be used for all of the four connecting portions (9, 10, 11, and 12), can be used for one of the four connecting portions, or can be used partially. Furthermore, the stretch connecting member 51 can be used for the left wall 5, the right wall 6, the front wall 7, and the rear wall 8 entirely or partially.

### <Tenth embodiment and eleventh embodiment>

As shown in FIG. 16 and FIG. 17, in the battery cover 1 of the tenth embodiment and eleventh embodiment, for example, a stretch engagement portion is used for the engagement portion 21.

The battery cover 1 of the tenth embodiment includes, as shown in FIG. 16, a first stretch engagement portion 21a as a stretch engagement portion, and in the first stretch engagement portion 21a, a first projection 24 and a second projection 26 are formed longly in the longitudinal direction. That is, the first projection 24 and the second projection 26 are formed so as to expose a portion of the first projection 24 and the second projection 26 when the first projection portion 17 and the second projection portion 19 are inserted in the first slit 18 and the second slit 20, respectively, when seen from the inside (inside the battery cover 1).

By including the first stretch engagement portion 21a, the battery cover 1 can be attached to the batteries 31 having different sizes. Particularly, before the attachment, by elongating the first stretch engagement portion 21a, a gap can be generated between the battery 31 and the battery cover 1, and therefore the battery cover 1 can be attached around the battery 31 easily.

The battery cover 1 of the eleventh embodiment includes, as shown in FIG. 17, a second stretch engagement portion 21b as the stretch engagement portion, and in the second stretch engagement portion 21b, a spring portion 56 is provided so as to extend in the longitudinal direction on each of the first head portion 25 and the second head portion 27. The spring portion 56 is formed from an elastic body, and integrally includes a fixing portion 57 and a stretch portion 58. The fixing portion 57 is fixed in the left thick portion 5a on one side in longitudinal direction at generally a center portion of the left thick portion 5a so as to be spaced apart from the first projection portion 17 and the second projection portion 19. The stretch portion 58 is formed into a saw blade shape.

By including the second stretch engagement portion 21b, the battery cover 1 can be attached to the batteries 31 having different sizes. Particularly, after the attachment, in the second stretch engagement portion 21b, the spring portion 56 applies tension in one side in longitudinal direction, that is, the tension applies so as to decrease the inner periphery of the battery cover 1, so that the battery cover 1 can be reliably brought into close contact and fixed to the battery 31.

### <Twelfth embodiment>

As shown in FIG. 18, in the battery cover 1 of the twelfth embodiment, a fusion portion 64 is used as the to-be-engaged portion 13, and a to-be-fused portion 63 is used as the engagement portion 21.

In the twelfth embodiment, the battery cover 1 is composed of two members (first battery cover part 61 and second battery cover part 62). In the first battery cover part 61 and the second battery cover part 62, at one side end portion in longitudinal direction, a to-be-fused portion 63 is formed, and at the other side end portion in longitudinal direction thereof, a fusion portion 64 is formed.

The fusion portion 64 is formed into generally a rectangular shape when viewed from the side extending in up-down directions, and is formed to be thin, The surface of the fusion portion 64 is composed of a material that melts by, for example, heat, and connects with the to-be-fused portion 63.

The to-be-fused portion 63 is formed into generally a rectangular shape when viewed from the side extending in up-down directions, and is formed to be thin.

Then, the inner side face (in FIG. 18, front side on the plane of the sheet) of the fusion portion 64 of the first battery cover part 61 is allowed to fuse to the outer side face (in FIG. 18, far side on the plane of the sheet) of the to-be-fused portion 63 of the second battery cover part 62, and the inner side face of the fusion portion 64 of the second battery cover part 62 is allowed to fuse to the outer side face of the to-be-fused portion 63 of the first battery cover part 61, thereby producing the battery cover 1.

The fusion portion 64 and the to-be-fused portion 63 can be used in the first embodiment shown in FIG. 2. In such a case, the fusion portion 64 is formed instead of the to-be-engaged portion 13, and the to-be-fused portion 63 is used instead of the engagement portion 21.

The to-be-fused portion 63 and the fusion portion 64 can also be formed from a stretch member. When the to-be-fused portion 63 and the fusion portion 64 are formed from a stretch member, the same operations and effects as those of the eighth embodiment are achieved,

### <Thirteenth embodiment>

As shown in FIG. 19, in the battery cover 1 of the thirteenth embodiment, for example, the first spacer 3 is composed of eight first spacers 3 (3a, 3b, 3c, 3d, 3e, 3f, 3g, and 3h),

That is, the individual first spacer is provided for each of the left wall 5, the left-front connecting portion 9, the front wall 7, the right-front connecting portion 11, the right wall 6, the right-rear connecting portion 12, the rear wall 8, and the left-rear connecting portion 10 at the upper end of the inner face thereof. Between each of the first spacers 3 (3a, 3b, 3c, 3d, 3e, 3f, 3g, 3h), a cut 60 is formed.

By composing the first spacer 3 from eight first spacers 3, the battery 31 can be smoothly inserted in the battery cover 1.

### <Fourteenth embodiment>

In the battery cover 1 of the fourteenth embodiment, although not shown, the inner side face of the first spacer 3 is formed with a weak adhesive layer. The weak adhesive layer is formed on the entire inner side face of the first spacer 3. The weak adhesive layer is formed from a material that is bonded to the battery 31 when making contacts with the battery 31, but can be removed from the battery 31 with a small force, for example, from an acrylic polymer.

By providing the weak adhesive layer, sealing performance between the first spacer 3 and the battery 31 improves, and intrusion of outside air and escaping of internal air can be effectively prevented.

Although not shown, the inner side face of the third spacer 4 can also be provided with the weak adhesive layer.

### <Fifteenth embodiment>

In the battery cover 1 of the fifteenth embodiment, although not shown, the left thick portion 5a, the right thick portion 6a, the front thick portion 7a, the rear thick portion 8a, the second left-front spacer 9a, the second left-rear spacer 10a, the second right-front spacer 11a, and the second right-rear spacer 12a can also be bulged toward outside of the battery cover 1. The battery cover 1 of the fifteenth embodiment can also achieve the same operations and effects as those of the first embodiment.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### [Descriptions of reference numeral]

1 battery cover
2 side wall
3 first spacer
5 left wall
6 right wall
7 front wall
8 rear wall
9a second left-front spacer
9d and 9e left-front bending portions
10a second left-rear spacer
10d and 10e left-rear bending portions
11a second right-front spacer
11d and 11e right-front bending portions
12a second right-rear spacer
12d and 12e right-rear bending portions
28 folding portions
31 battery
37 space
39 foam layer
40 skin
41 opening
42 flap
43 first opening
44 second opening

## Claims

1. A battery cover (1) comprising:
side walls (2) that cover four side faces of the battery,
a first spacer (3) provided at a top portion of the side walls (2) for providing a space between the battery and the side walls (2),
**characterized by**
a second spacer provided on the side walls along up-down directions,
the second spacer provided on the side walls configured to be brought into contact with the corners of the side faces of the battery when the battery cover is attached to the battery; the second spacer comprising at least four second spacers (9a, 10a, 11a, 12a); and
the at least four second spacers (9a, 10a, 11a, 12a) provided on the side walls configured to be brought into contact with the four corners of the side faces of the battery.

## Patentansprüche

1. Batterieabdeckung (1), die Folgendes umfasst:
Seitenwände (2), die vier Seitenflächen der Batterie abdecken,
einen ersten Abstandshalter (3), der in einem oberen Abschnitt der Seitenwände (2) vorgesehen ist, um zwischen der Batterie und den Seitenwänden (2) einen Raum bereitzustellen,
**gekennzeichnet durch**
einen zweiten Abstandshalter, der an den Seitenflächen in den Aufwärts/Abwärts-Richtungen vorgesehen ist,
wobei der zweite Abstandshalter, der an den Seitenwänden vorgesehen ist, konfiguriert ist, mit den Ecken der Seitenflächen der Batterie in Kontakt zu gelangen, wenn die Batterieabdeckung an der Batterie befestigt ist; wobei der zweite Abstandshalter wenigstens vier zweite Abstandshalter (9a, 10a, 11a, 12a) umfasst; und
die wenigstens vier zweiten Abstandshalter (9a, 10a, 11a, 12a), die an den Seitenwänden vorgesehen sind, konfiguriert sind, mit den vier Ecken der Seitenflächen der Batterie in Kontakt zu gelangen.

## Revendications

1. Couvercle de pile (1) comprenant :
des parois latérales (2) qui recouvrent quatre faces latérales de la pile,
un premier espaceur (3) disposé sur une partie supérieure des parois latérales (2) en vue de prévoir un espace entre la pile et les parois latérales (2),
**caractérisé par**
un deuxième espaceur disposé sur les parois latérales dans des directions de haut en bas,
le deuxième espaceur disposé sur les parois latérales conçues pour être mises en contact avec les coins des faces latérales de la pile lorsque le couvercle de pile est attaché à la pile ; le deuxième espaceur comprenant au moins quatre deuxièmes espaceurs (9a, 10a, 11a, 12a) ; et
les au moins quatre deuxièmes espaceurs (9a, 10a, 11a, 12a) disposés sur les parois latérales conçues pour être mises en contact avec les quatre coins des faces latérales de la pile.
